# EUROPEAN PATENT APPLICATION

(11) **EP 1 421 844 A2**
(43) Date of publication of application: **26.05.2004**
(21) Application number: 03425451.6
(22) Date of filing: 10.07.2003
(51) Int. Cl.: A01G 9/02

(54) **Container for growing, in limited spaces, plants of various nature and origins**

(30) Priority: 21.11.2002 EP 02425713
(71) Applicant: Cerchi, Giuliano, 51010 Marliana (IT)
(72) Inventor: Cerchi, Giuliano, 51010 Marliana (IT)

(57) **Abstract**

Container for cultivation, in small spaces, for plants of various origins or nature; in single or double side, with piling up or aligning facilities ― manufactured in any shape - be it regular or irregular.

This container can be manufactured in any kind of material and employing any construction method, it can be part of railing, fencing or interior design structures.

## Description

The designed object, in this description, is a container for the cultivation - in small places - of plants of various nature or origins such as vegetables, garden plants, flowers, small soft fruits and so on.
Therefore, intensive cultivation is possible and plants can have all the necessary space to allow growth.

The original idea follows a previous patent, relative to a model used for potted intensive cultivation system - primarily used for nurseries and/or floriculture industries - submitted and patented by the patent holder himself on January 19^{th} 2000 as for document n° PT 2000U000001.

In this instance the product can be industrially manufactured both for domestic or industrial use in all sectors and in particular in the nursery and floriculture or intensive cultivation.
The container in Table 1, in the rectangular shape, has five sides and in particular:
- (a) and (b) which is characterised by a cavity (f) which has two purposes: to create a base on which other units can be piled on, or to act as a handle for moving it around when necessary (tab. 4 and tab. 5);
- (c) and (d), on the external side, are characterised by a series of cavities (h) - whose number can vary depending on the container size or according to the type of cultivation which are allocated to. They have e hemispherical shape and are directly connected internally with the insides of the container itself;
- (e) has various holes which allow drainage and on whose extremities two protuberances are placed; those can be used as base or as elements for piling more units on ( table 4 and table 5)

The container can be built with all kinds of material:
- elements in moulded steel and elettrowelded or sealed together through means of various methods;
- elements in plastic material clued or connected together through means of various methods;
- the entire units can be build in moulded plastic material or any-manufactured plastic;
- elements made of a diversity of materials connected through means of various methods;
- elements which could result more appropriate according to the development of new technology.

Table 3 represents the container in section on the cavities' axis and shows how the soil, used, for the cultivation, can fill the entire container up inside the cavities in which the plants are placed in order to grow.
Table 4 shows two piled up containers - the number of containers can be more then two.
Table 5 shows in section the detailed piling up, it also shows clearly how the upper container is stable and therefore cannot move vertically or horizontally.

The holes, on the lower side of the container (table 1/e) allow drainage, overflow of water and/or possible feeding treatments to the lower container too.

The containers - whereas piled or not - can be displayed one next to the other so to obtain cultivation in straight lines.

The container can be manufactured also in the shape shown in table 6 in which the five containers are made as follows:
- (a) and (b) which in the upper part, have a socket (f) that has a double function: to create a stable base for the possible piling up and to be used as a handle for moving it around, table 4 and table 5.
- (d) which shows, in the external part , a number of cavities (h) which can vary in number - according to the type of container or cultivation which are allocated to. They have a hemispherical shape and are directly connected internally with the insides of the container itself.
- (e) has various holes which allow drainage and on whose extremities two protuberances are placed; those can be used as base or as elements for piling more units on, table 4 and table 5.
- (m) is one block panel with no holes.

Table 8 shows in section, on the cavities' axis, the container in such version.
The construction of this container can be carried out with the material mentioned and described above.
The only difference between the two types of containers, as shown in the tables, consists sonly in that: in Table 1, the cultivation can be carried out on both sides, whereas in the container on Table 6 cultivation is possible on one side only.
The containers above described, in both versions, can be used, not only as a cultivation system but also as fences, windowsills, railings for balconies or for any interior or exterior design structures.
The containers - whereas displayed on their own or piled up or aligned - can be equipped with appropriate systems for watering, feeding and anti-parasites treatments.

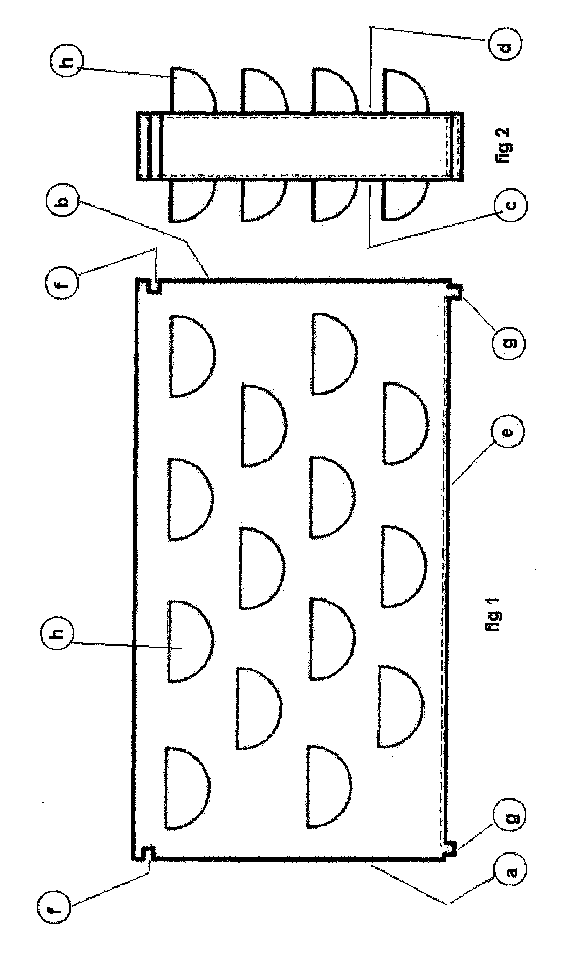

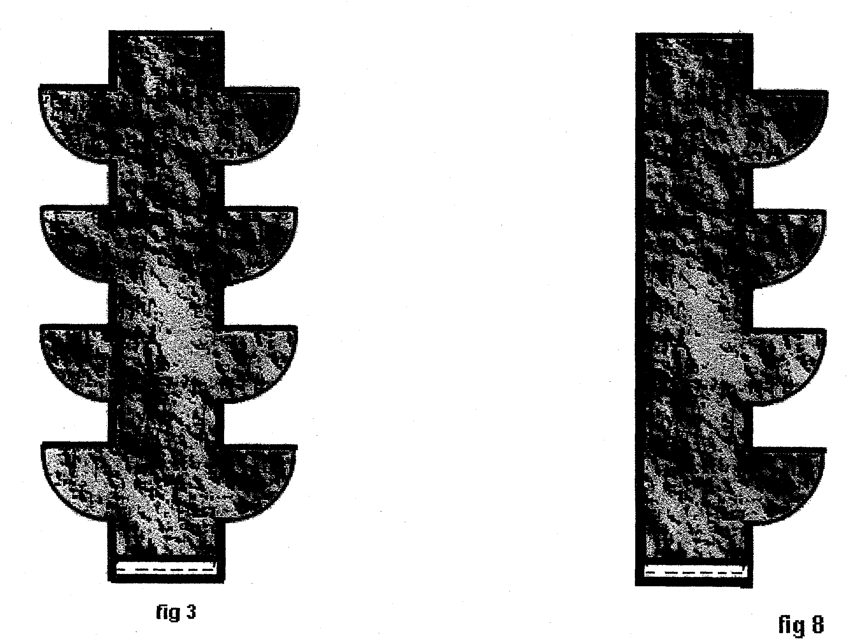

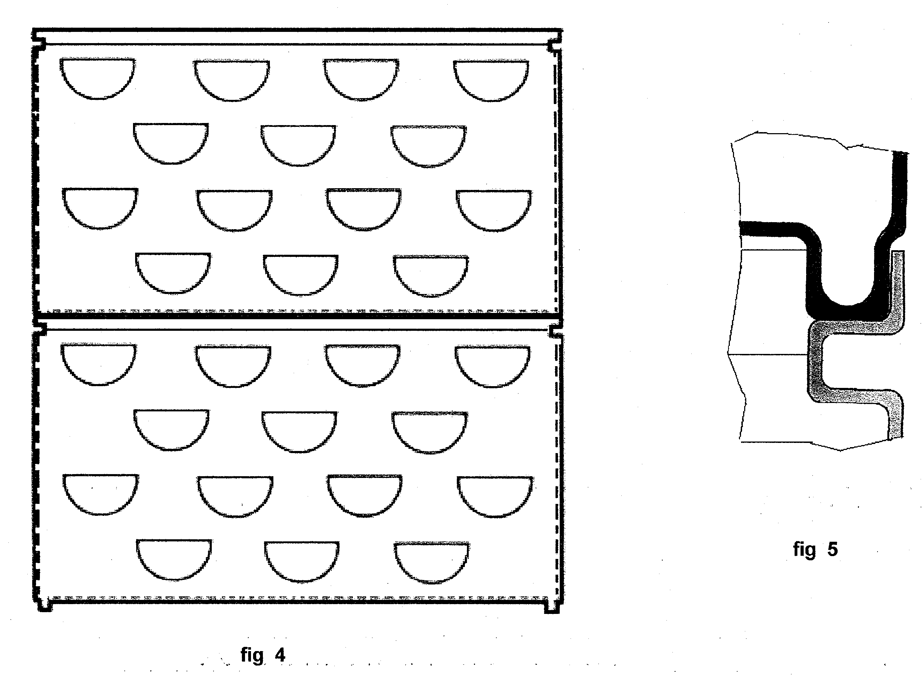

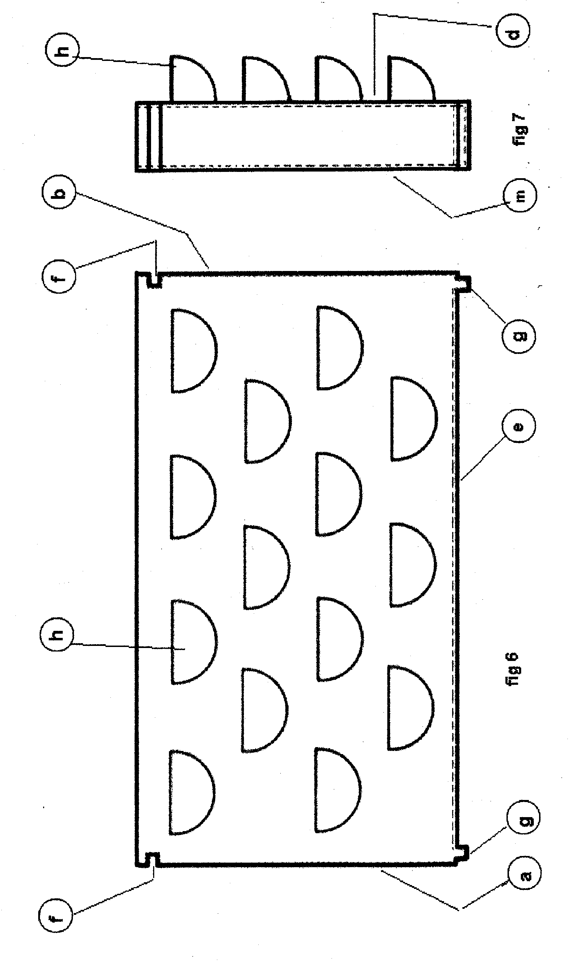

## Claims

1. Container for the cultivation, in small spaces, of plants of various nature or origins in rectangular shape where cultivation is possible on both sides.

2. Container for the cultivation, in small spaces, of plants of various nature or origins in rectangular shape where cultivation is possible on one side only.

3. Container for the cultivation, in small spaces, of plants of various nature or origins in any regular or irregular shape where cultivation is possible on both sides.

4. Container for the cultivation, in small spaces, of plants of various nature or origins in any regular or irregular shape where cultivation is possible on one side only.

5. Container for the cultivation, in small spaces, of plants of various nature or origins where cultivation is possible on one or both sides as part of interior design structure.

6. Container for the cultivation, in small spaces, of plants of various nature or origins where cultivation is possible on one or both sides as part of fencing structures.

7. Container for the cultivation, in small spaces, of plants of various nature or origins where cultivation is possible on one side or both sides as part of railing structures.

8. Container's piling system.

9. Any shape and form cavities in any different form from the normal hemispherical shape.
